# EUROPEAN PATENT APPLICATION

(11) **EP 2 664 791 A2**
(43) Date of publication of application: **20.11.2013**
(21) Application number: 13167746.0
(22) Date of filing: 14.05.2013
(51) Int. Cl.: F03D 7/02, F03D 1/06

(54) **Wind turbine blade of variable geometry with passive control**

(30) Priority: 18.05.2012 ES 201200519
(71) Applicant: Torres Martinez, Manuel, 31007 Pamplona (Navarra) (ES)
(72) Inventor: Torres Martinez, Manuel, 31007 Pamplona (Navarra) (ES)
(74) Representative: Cabinet Plasseraud

(57) **Abstract**

The present invention relates to a wind turbine blade of variable geometry with passive control, incorporating lift-regulating means formed by elastic membranes (4, 4a), arranged on the surface of the extrados face of the aerodynamic profile, which membranes (4, 4a) have an inner chamber which is arranged connected to a pneumatic circuit (8) through which a reference negative pressure generated by means of vacuum pumps (9) is applied, such that said membranes (4, 4a) can be deformed as a function of the air striking the blade (1) of application in order to modify the aerodynamic characteristics thereof.

## Description

### Field of the Art

The present invention relates to the dynamic action of wind turbine blades in their function of collecting wind energy, proposing a blade of variable geometry which is capable of reducing the extreme loads received by the blade by means of a passively controlled system of elastic membranes activated by means of distributing pressures along the aerodynamic profile forming the blade with respect to reference pressures which act on the membranes and which are generated by suction pumps.

### State of the Art

Wind turbine blades are the elements that collect wind energy to rotate a rotor which drives an electric generator, said blades comprising large structures (between 50 and 70 meters in length for capacities of between 2 and 5 MW of the wind turbine of application), whereby the wind energy collection is proportional to the swept area of the blades, such that the current technique tends to increase the ratio between the swept area of the blades and the nominal power of wind turbines to increase their production with winds at a lower speed.

In that sense, the structural concept of the blades, the design of more efficient aerodynamic profiles and the automated manufacturing processes which assure repeatability, quality and cost reduction, are the main factors of innovation in the wind turbine sector today.

The increase in the ratio of the swept area of the blades and the nominal power of the wind turbine of application is conventionally solved using longer blades, a solution that has several critical aspects such as the increase in loads that the wind turbine must withstand and the aerodynamic noise.

Aerodynamic noise is the main source of sound in wind turbines, a factor which is regulated by the law in force, said aerodynamic noise being produced in the outermost areas of the blades, such that to keep the noise within the accepted levels, a reduction of the rotational speed of the wind rotor, which involves a greater mechanical torque, greater loads and additional needs in the electric generator, may be necessary.

On the other hand, the action of the wind on the blades of wind turbines causes a pressure effect in the intrados face and a suction effect in the extrados face, this suction effect increasing along the blade from the root to the tip, which means that the blades have to withstand working loads that vary over time, such that strong and extreme winds and gusts cause elevated loads, robust designs and oversizing of the structural elements being necessary for withstanding said loads and fatigue behavior. Load increases result from the fact that the increase of wind speed entails an increase of the relative speed in the profile of the blades and a modification of the angle of attack of said profile, which effects jointly give rise to a resulting force greater than the estimated design force.

Furthermore, wind speed is not uniform throughout the entire swept surface of the blades of wind turbines, because in addition to the local differences produced by temporary phenomena, such as turbulences or direction changes, wind speed also tends to increase with height with respect to the ground, according to a law of logarithms, which causes the operation of each blade in a wind turbine to be affected by a resultant of aerodynamic loads that is different from that of the other blades as a function of the position of the blade and of the randomness of the wind.

To that end, systems for reducing loads and optimizing power are incorporated in the blades of modern wind turbines, the most common system being the pitch mechanism whereby each blade is oriented so that it is located in the optimal position in each working point; there being other systems as well, for example, aerodynamic brakes at the tip area of the blades. However, said conventional systems generally have a response time that does not allow them to react in time in response to quick temporary phenomena such as gusts of wind which end up causing more elevated loads in the blades and in the wind turbine assembly.

In this respect, various techniques have been proposed for reducing loads in the blades of wind turbines by means of modifying the geometry of the profile of the blades, in this sense, for example:
Patent US 6361275 proposes a system for controlling loads by means of introducing independent pitch mechanisms for each of the blades.
Patent EP 2282052 proposes a system for increasing the lift generated by each blade through a small-sized profile which is attached to the blade in normal conditions but can be separated from same to increase lift.
Patent US 4692095 proposes a system of means which in a normal operation are located in the intrados of the blade (high pressure area where the influence of said means is relatively low), but are moved to the extrados (low pressure area where the influence of those means is significant) at specific times, thus modifying the aerodynamic characteristics of the blade.
Patent WO 2004/099608 proposes a wind turbine blade incorporating systems of flaps located at the leading edge and/or at the trailing edge along the longitudinal direction of the blade, said flaps being activated by hydraulic means, electromagnetic means, pneumatic means or piezoelectric fibers for modifying the aerodynamic properties of the blade according to the requirements of the working point through sensors incorporated in the blade.
Patent WO 2008/080407 proposes a wind turbine blade incorporating a series of air emitting slots and/or holes for modifying the aerodynamic properties of the blade according to the requirements of the working point through the action of sensors incorporated in the blade.
Patent ES 2261100 proposes a wind turbine incorporating means which are activated in a sector of the swept area of the blades to reduce noise generation, the application to reduce lift according to the speed of the striking wind also being possible.

All these systems are operated by actuators of one type or another, the response time of which from detecting the need until achieving the end position is usually longer than the time necessary to achieve correct load control in response to quick variations in the aerodynamic conditions affecting the blades in wind turbines.

### Object of the Invention

The invention proposes a wind turbine blade provided with a system of variable geometry with passive control through the pressures generated by the air striking the aerodynamic profile.

Said system is based on arranging elastic membranes located in the aerodynamic profile along the longitudinal direction of the blade, those membranes being capable of deforming due to the difference between the pressure acting on the outer face thereof which is exposed to the air striking the blade and a reference pressure generated by suction pumps which acts on the inner part.

A blade is thus obtained where the membranes incorporated therein deform as a function of the air striking the blade, modification of the aerodynamic characteristics of the profile of the blade being achieved by means of said deformation of the membranes, whereby the loads generated in the blade assembly are maintained at nominal values in response to the variations in the aerodynamic conditions experienced by the blade.

Therefore, said blade object of the invention has certain features making it advantageous for the function to be developed in the wind turbines of application, acquiring its own identity and preferred character with respect to the solutions applied in conventional blades for compensating for variations in the aerodynamic conditions thereof due to the changing action of the wind.

### Description of the Drawings

Figure 1 shows a front view of a wind rotor of a wind turbine with three blades structured according to the invention.
Figure 1A is an enlarged partial detail of the preceding figure.
Figure 2 shows a perspective view of the profile of a wind turbine blade with a series of longitudinal membranes according to the invention.

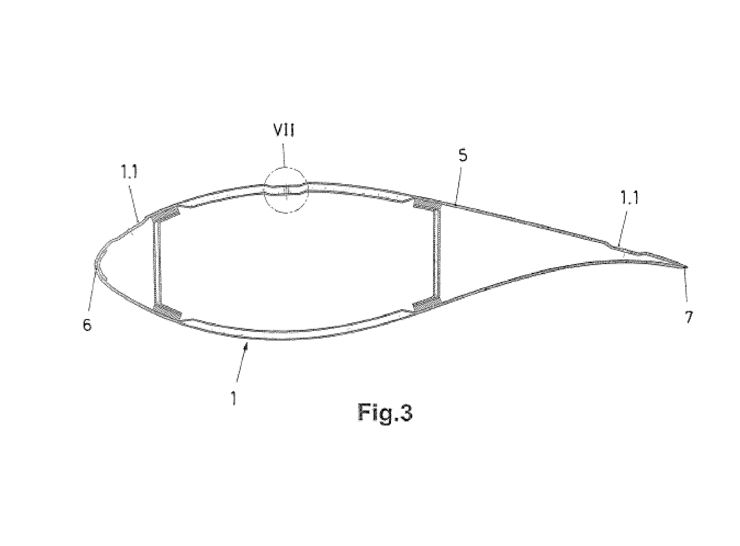

Figure 3 is an enlarged cross-section view of an aerodynamic profile of a blade provided with recesses intended for incorporating the membranes according to the invention.
Figure 4 is a cross-section view such as that of the preceding figure with the membranes incorporated and in a normal position without deformation thereof.
Figure 5 is a cross-section view such as that of the preceding figure with the membranes outwardly deformed.
Figure 6 is a cross-section view such as that of the preceding figure with membranes that are variably deformable in one direction.
Figure 7 is an enlarged detail of the zone VII indicated in Figure 3.
Figure 8 is an enlarged detail of the zone VIII indicated in Figure 4.
Figure 9 is an enlarged detail of a membrane such as that incorporated in the preceding figure.
Figure 10 is an enlarged detail of the zone X indicated in Figure 5.
Figure 11 is an enlarged detail of the zone XI indicated in Figure 6.
Figure 12 shows a graph of the distribution of the lift force in the longitudinal direction of a conventional wind turbine blade in response to a uniform ideal wind.
Figure 13 shows a graph of the distribution of the lift force in the longitudinal direction of a conventional wind turbine blade in response to a turbulent wind, printed over the distribution of the lift force in response to a uniform ideal wind depicted with dashes.
Figure 14 shows a graph of the distribution of the lift force in the longitudinal direction of a wind turbine blade provided with a system for controlling loads according to the invention, in response to a turbulent wind, printed over the distribution of the lift force in response to a uniform ideal wind depicted with dashes.

### Detailed Description of the Invention

The object of the invention relates to a blade (1) of the types which are arranged with a distribution of two or three blades (1) in a wind rotor (2) incorporated on a tower (3) for forming a wind turbine.

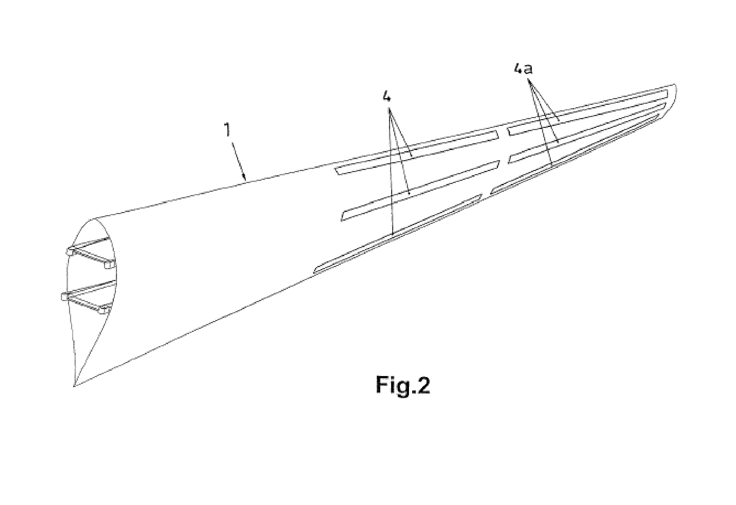

The proposed blade (1) incorporates membranes (4, 4a) arranged in the longitudinal direction of the aerodynamic profile which forms the blade (1), for example, in three areas distributed in the width of the extrados face (5) of the aerodynamic profile, one close to the leading edge (6) of the profile, another in the central part and another close to the trailing edge (7) of the profile, as observed in Figure 2.

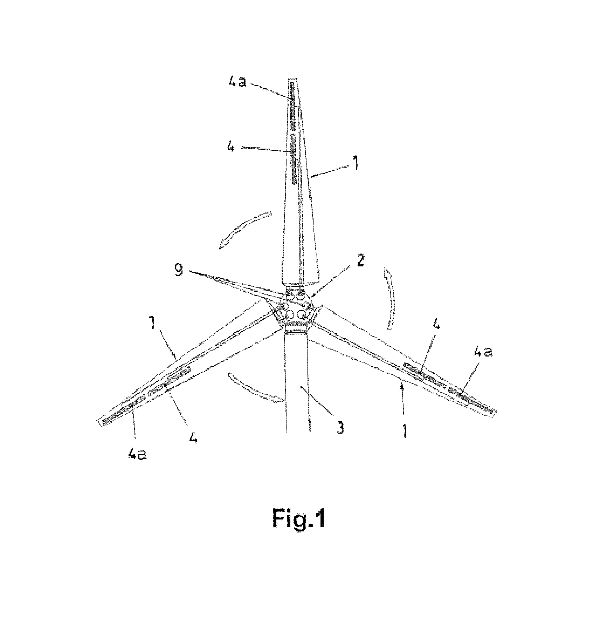

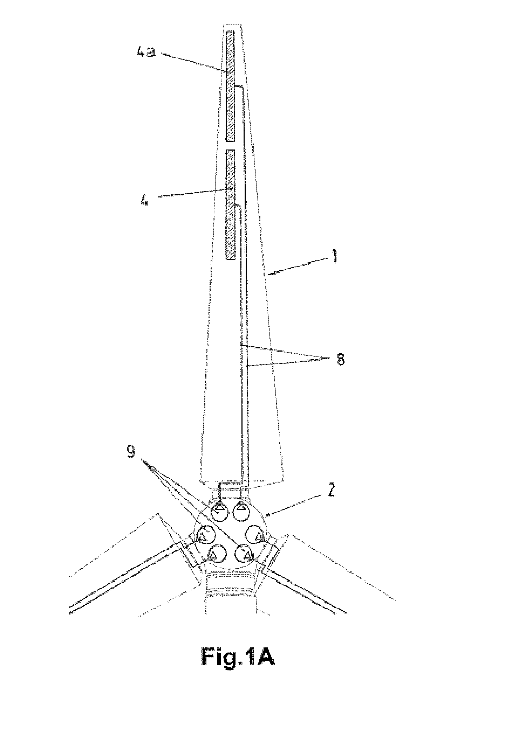

The membranes (4, 4a) are housed in recesses (1.1) defined on the outside of the aerodynamic profile of the blade (1), flush with the surface of said aerodynamic profile, and are made of an elastic material with deformation capability, internally determining a chamber which communicates through the lower part with a pneumatic circuit (8) connected to a vacuum pump (9) that maintains a negative pressure (10) tared to a nominal working value. The use of independent vacuum pumps (9) is particularly envisaged for each membrane or groups of membranes (4, 4a) of each blade (1), as observed in the example of Figure 1.

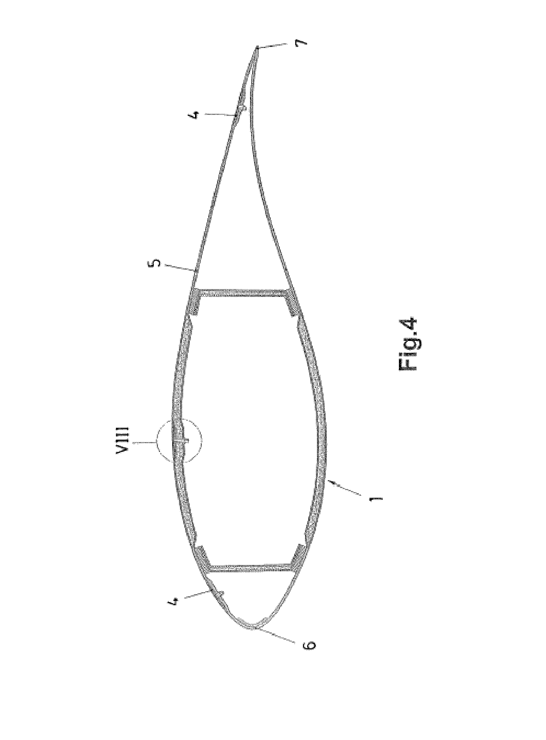

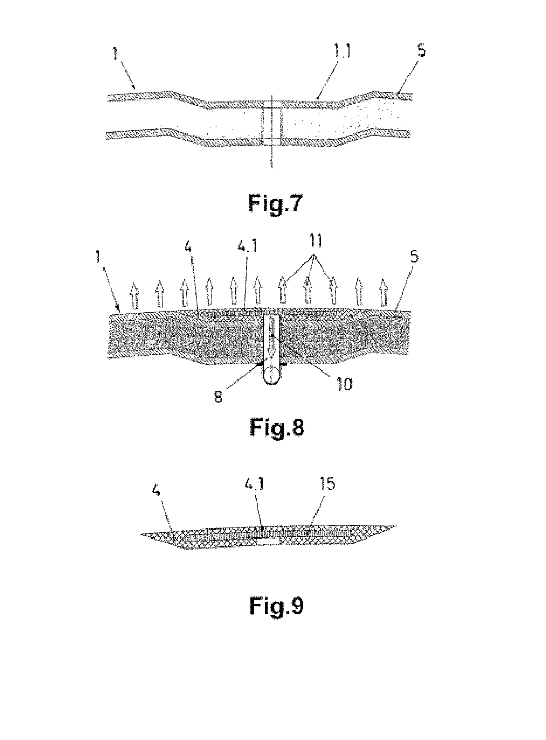

Therefore, considering a membrane (4) arranged on the surface of the extrados face (5) of the aerodynamic profile of a blade (1) of application for example, said membrane (4) remains in a normal state, as shown in Figures 4 and 8, when the suction pressure (11) generated by the action of the air in the outer part of the aerodynamic profile is less than the negative pressure (10) generated in the inner part by the corresponding vacuum pump (9) in the pneumatic circuit (8).

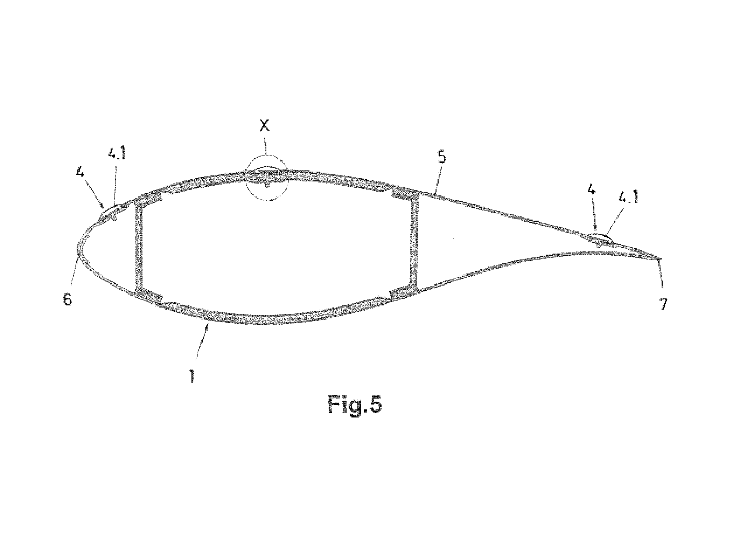

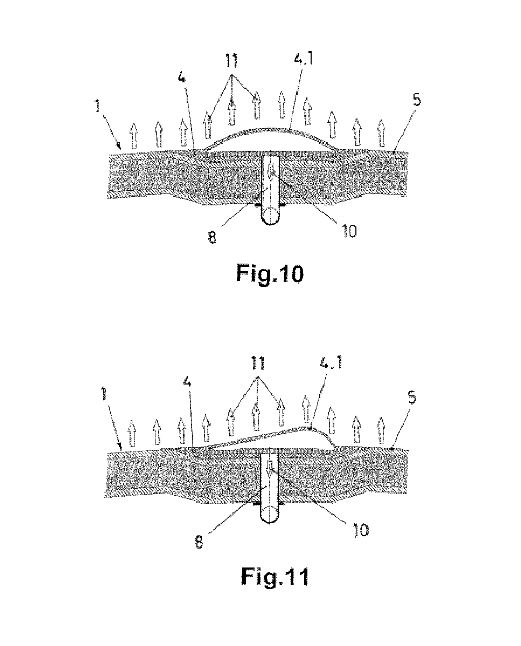

However, if in response to turbulent winds or gusts which modify the aerodynamic conditions of the blade (1) of application, the value of the outer suction pressure (11) exceeds the negative pressure (10) acting through the pneumatic circuit (8) along the inner part, the membrane (4) outwardly deforms, as observed in Figures 5 and 10, thus modifying the geometry of the profile and therefore the aerodynamic characteristics of the blade (1) of application.

This allows compensating for the aerodynamic alterations which the blades (1) experience when phenomena such as turbulences or gusts of wind occur, since these phenomena cause variations in the aerodynamic conditions of the profile of the blades (1) with respect to the normal state, because the pressure distribution in said profile is modified, increasing the lift above the nominal value. In this respect, the incorporation of membranes (4, 4a) in the profile of the blades (1) according to the invention allows instantaneously compensating for that modification in pressure distribution in the extrados face (5), whereby it results in a lift that does not exceed the nominal working value, without the need of waiting for the response of sensors and actuating means.

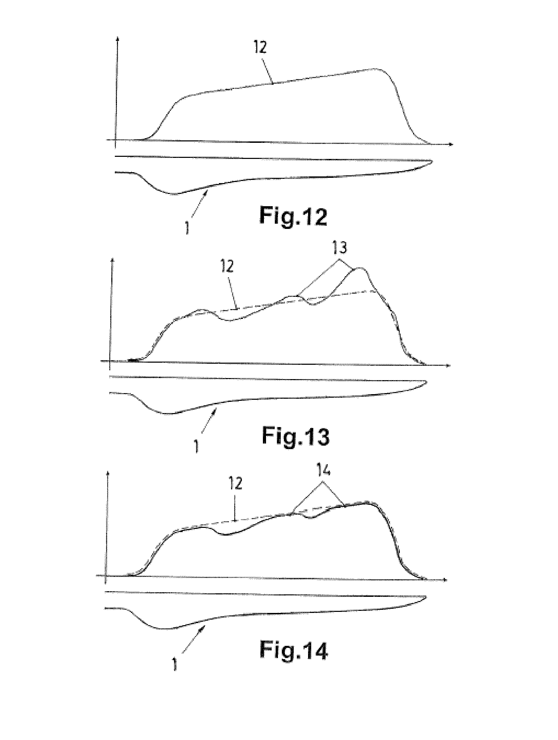

Therefore, compared to a conventional blade where in response to a uniform ideal wind a distribution (12) of the lift force would occur in the longitudinal direction as shown in Figure 12, and where with a turbulent wind or gusts loads (13) greater than the nominal working load according to the ideal distribution (12) are produced as shown in Figure 13, the local response of the lift generated along a blade (1) incorporating membranes (4, 4a) according to the invention, involves the fact that in said blade (1) according to the invention the membranes (4, 4a) are activated when that situation of turbulent winds or gusts occurs, maintaining a load distribution (14) with levels equivalent to the nominal values of ideal distribution (12), as shown in Figure 14.

The incorporation of several membranes (4, 4a) in the profile of a blade (1) as shown in Figures 4 and 5 allows a smooth response to the modification in lift as a function of the characteristics of the aerodynamic profile of each section of the blade (1), as well as of the characteristics of the wind turbine of application and of the wind at the installation site.

The membranes (4, 4a) located in the area close to the trailing edge (7) of the aerodynamic profile can furthermore be activated in the same manner to reduce the level of noise generated by the blades (1) of wind turbines in specific critical working conditions, since a geometry of the deformation of said membranes (4, 4a) which is suitable for the aerodynamic profile of the blade (1) of application allows reducing the aerodynamic noise.

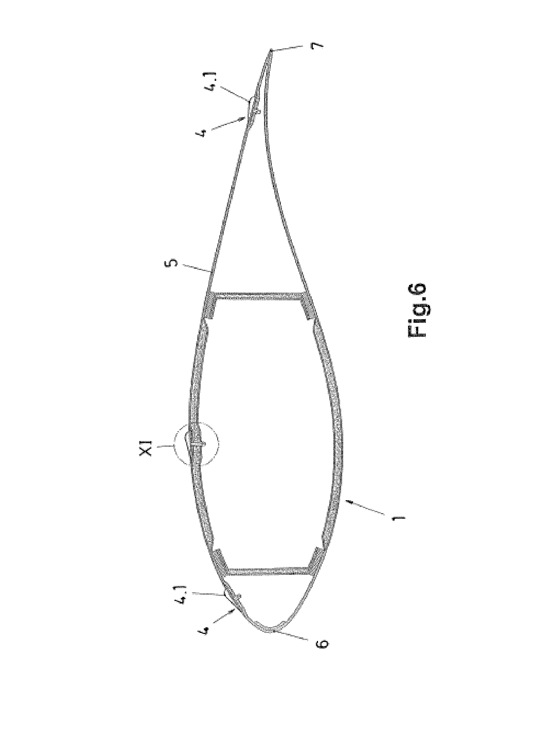

The design characteristics of the membranes (4, 4a) allow, by means of varying the thickness and the rigidity of the deformable part (4.1) thereof, such as shown in Figures 6 and 11, said membranes (4, 4a) to variably deform in one direction, making it possible for the modification of the geometry of the aerodynamic profile to be adapted to the required needs in each section of the blade (1) of application for obtaining the expected response.

A mesh (15) is arranged in the inner chamber of the membranes (4, 4a), whereby there is always an amount of air in said inner chamber of the membranes (4, 4a), preventing the walls thereof from sticking together, so that the negative pressure (10) applied through the corresponding pneumatic circuit (8) performs the necessary effect.

The vacuum pumps (9) linked to the membranes (4, 4a) can be placed in the wind rotor (2) of the wind turbine of application, the latter being a preferred location, but they can also be placed in the blades (1) themselves or in other parts of the wind turbine and even outside the wind turbine; a variation in the working pressure of said vacuum pumps (9) in response to different operating parameters of the wind turbine, such as the non-limiting examples of the angle rotated by the pitch mechanism or the rotational speed of the wind rotor (2), can be established.

The use of membranes (4, 4a) or groups of membranes in connection with independent vacuum pumps (9) is also envisaged, thus allowing the use of different reference negative pressures (10) in different areas of the blades (1) of application and even as a function of the position of each blade (1) in the rotational sweeping of the wind rotor (2) during operation.

The control of the vacuum pumps (9) further allows, on specific occasions, facilitating the entry into operation of the membranes (4, 4a) in other conditions beyond the punctual increase of the load distribution in the blades (1) of application. In that sense, the membranes (4a) of the furthermost part of the blades (1) can be activated, for example, once a specific power is reached, such that the lift generated in said end zone of the blades (1) is cancelled out, whereby a virtual blade length reduction effect is achieved, thus allowing the implementation of larger wind rotors (2), without it involving an increase of loads in the structure and therefore without the need of incorporating additional reinforcements therein.

## Claims

1. A wind turbine blade of variable geometry with passive control, incorporating lift-regulating means located on the surface of the extrados face of the aerodynamic profile in the longitudinal direction of the blade (1) of application, **characterized in that** the lift-regulating means are formed by elastic membranes (4, 4a), the outer face of which is exposed to the air flow striking the outer surface of the aerodynamic profile of the blade (1), said membranes (4, 4a) having an inner chamber which is arranged connected to a pneumatic circuit (8) through which a reference negative pressure (10) generated by means of vacuum pumps (9) is applied.

2. The wind turbine blade of variable geometry with passive control according to claim 1, **characterized in that** the membranes (4, 4a) are located in areas distributed in the width of the aerodynamic profile of the blade (1).

3. The wind turbine blade of variable geometry with passive control according to claim 1, **characterized in that** the membranes (4, 4a) are located in areas distributed in the longitudinal direction of the blade (1).

4. The wind turbine blade of variable geometry with passive control according to claim 1, **characterized in that** at least one group of membranes (4, 4a) is located in an area close to the trailing edge (7) of the aerodynamic profile of the blade (1).

5. The wind turbine blade of variable geometry with passive control according to claim 1, **characterized in that** the vacuum pumps (9) are located in any part of the wind turbine of application or outside same.

6. The wind turbine blade of variable geometry with passive control according to claim 1, **characterized in that** the membranes (4, 4a) are arranged connected individually or in groups to independent vacuum pumps (9) by means of corresponding pneumatic circuits (8).

7. The wind turbine blade of variable geometry with passive control according to claim 1, **characterized in that** the negative pressure (10) generated by the vacuum pumps (9) with respect to the membranes (4, 4a) is controlled by operating parameters of the wind turbine of application, such as the rotational speed of the blades (1) or the angle of orientation thereof.

8. The wind turbine blade of variable geometry with passive control according to claim 1, **characterized in that** a mesh (15) preventing the walls of the chamber from sticking together is arranged in the inner chamber of the membranes (4, 4a).
